# EUROPÄISCHE PATENTSCHRIFT

(11) **EP 3 737 847 B1**
(45) Veröffentlichungstag und Bekanntmachung des Hinweises auf die Patenterteilung: **20.08.2025**
(21) Anmeldenummer: 19700579.6
(22) Anmeldetag: 11.01.2019
(51) Int. Cl.: F02D 29/06, F02D 41/14, F02D 41/04, H02P 9/04, F02D 31/00, F02D 41/02

(54) **VERFAHREN ZUR STEUERUNG UND REGELUNG EINER BRENNKRAFTMASCHINE MIT GENERATOR UND ASYNCHRONMASCHINE, SOWIE BRENNKRAFTMASCHINE**
METHOD FOR THE CONTROL AND REGULATION OF AN INTERNAL COMBUSTION ENGINE WITH GENERATOR AND ASYNCHRONOUS MOTOR, AND INTERNAL COMBUSTION ENGINE
PROCÉDÉ POUR COMMANDER ET RÉGULER UN MOTEUR À COMBUSTION INTERNE AVEC GÉNÉRATEUR ET MOTEUR ASYNCHRONE, ET MOTEUR À COMBUSTION INTERNE

(30) Priorität: 11.01.2018 DE 102018100541
(43) Veröffentlichungstag der Anmeldung: 18.11.2020
(73) Patentinhaber: Rolls-Royce Solutions GmbH, 88045 Friedrichshafen (DE)
(72) Erfinder: Hecker, Stefan, 88281 Schlier (DE); Weiß, Hendrik, 88046 Friedrichshafen (DE)
(74) Vertreter: Eisenführ Speiser
(86) Internationale Anmeldenummer: PCT/EP2019/050629
(87) Internationale Veröffentlichungsnummer: WO 2019/138034

(56) Entgegenhaltungen:
- DE-A1- 19 624 343
- US-A1- 2010 106 389
- US-A1- 2014 015 257

## Beschreibung

Die Erfindung betrifft ein Verfahren zur Steuerung und Regelung einer Brennkraftmaschine mit Generator und Asynchronmaschine sowie eine Brennkraftmaschine mit Generator und Asynchronmaschine und mit einer Steuer- und Regeleinrichtung.

US 2014/0015257 A1 beschreibt ein Stromerzeugungssystem mit einem Motor, einem elektrischen Generator und einer Systemsteuerung und damit grundsätzlich ein solches Verfahren zur Steuerung und Regelung einer Brennkraftmaschine mit Generator. Der Motor ist konfiguriert, um mechanische Leistung zu erzeugen, und umfasst eine Motorsteuerung und einen Turbolader zur Erhöhung des Luftdrucks eines Ladedrucks. Der Turbolader wird von der Motorsteuerung gesteuert während des stationären Betriebs des Systems. Eine Systemsteuerung ist konfiguriert, ein Signal zu empfangen, das eine elektrische Last am Generator anzeigt. Während eines transienten Zustands, in dem die elektrische Last ansteigt, ist die Systemsteuerung so konfiguriert, dass sie den Turbolader direkt steuert, um die Konfiguration des Turboladers zu ändern, um den Ladedruck zu erhöhen.

Bei der Projektierung und im Betrieb von Brennkraftmaschinen wie Verbrennungsmotoren mit Generator werden andererseits oft Asynchronmaschinen als Lastmotoren für verschiedene Anwendungen beispielsweise als Antriebsmaschine für Lüfter, Pumpen und Hebezeuge verwendet. Asynchronmotoren sind eine der meistgebauten elektrischen Maschinen, da sie einfach und kostengünstig produziert werden können. Konstruktionsbedingt treten bei der Zuschaltung von Asynchronmaschinen hohe Anlaufströme, vom bis zu Achtfachen des Nennstromes auf. Diese hohen Anlaufströme verursachen eine kurzzeitige Leistungsüberhöhung. Dabei bricht die Drehzahl beispielsweise des Verbrennungsmotors mit Synchrongenerators deutlich ein. Die Drehzahlregelung des Verbrennungsmotors muss dann auf den Einbruch reagieren. So beschreibt DE 196 24 343 A1 ein Verfahren zumindest zur Regelung der Drehzahl einer Brennkraftmaschine auf eine vergebbare Drehzahl, insbesondere eine Leerlaufdrehzahl, zumindest in Abhängigkeit von Betriebsparametern und/oder Umgebungsparametern der Brennkraftmaschine, wobei die Regelung weiterhin in Abhängigkeit einer von den Betriebsparametern und den Umgebungsparametern der Brennkraftmaschine unabhängigen Störgröße erfolgt. In einem entsprechenden Programm wird die Störgröße festgestellt, d. h. beispielsweise die Spannung des Bordnetzes gemessen. Es gibt eine Abfrage, ob eine Regelung (Vorsteuerung) durchgeführt werden soll, wobei eine Regelung z. B. dann unterbleiben kann, wenn allgemein die Störgröße (die Drehzahl) der Brennkraftmaschine unterhalb oder oberhalb eines vorgebbaren Wertes (beispielsweise oberhalb der Leerlaufdrehzahl) liegt, bei der sich die Inbetriebnahme oder Außerbetriebnahme des elektrischen Verbrauchers nicht mehr auswirkt. Wenn die Regelung durchgeführt werden soll, verzweigt das Programm zu einer Regelung, mit der die entsprechende Vorsteuerung durch entsprechende Ansteuerung der Einspritzeinrichtung (z. B. Erhöhung oder Verringerung der eingespritzten Kraftstoffmenge oder der Stellung der Drosselklappe) ausgeführt wird. Nach Beendigung der Regelung verzweigt das Programm dann zu seinem ursprünglichen Ausgangspunkt oder auch zurück zu der vorgenannten Feststellung.

Auf dem Markt der Antriebstechnik existieren bereits einige Komponenten, welche die Problematik von hohen Anlaufströmen minimieren; hiersind beispielsweise Stern-Dreieck-Anlauf, Sanftstart und Frequenzumrichter zu benennen. Das am häufigsten verwendete Verfahren ist die Stern-Dreieck-Schaltung. Beim Anlauf in Sternschaltung sind Leistung und Drehmoment auf etwa ein Drittel reduziert. Nach der Hochlaufzeit wird durch Umsteuerung der Schütze auf Dreieckbetrieb umgeschaltet. Frequenzumrichter können, bei entsprechender Konfigurierung beziehungsweise Programmierung, Asynchronmotoren sanft und lastangepasst hochfahren.

In sicherheitskritischen Anwendungen ist aber nach wie vor ein Direktstart von Asynchronmotoren erwünscht, um eine geringere Ausfallwahrscheinlichkeit durch eine geringere Anzahl von Komponenten zu erreichen und möglichst auch teure leistungselektronische Komponenten einzusparen. Gleichzeitig soll ein Einbruch der Drehzahl des Verbrennungsmotors vermieden werden.

Diese Aufgabe wird gemäß einem ersten Aspekt der Erfindung gelöst durch ein Verfahren des Anspruchs 1. Das Verfahren zur Steuerung und Regelung einer Brennkraftmaschine, insbesondere eines Dieselmotors oder Gasmotors, mit Generator und Asynchronmaschine umfasst:
- Erfassen mindestens einer elektrischen Kenngröße des Generators, wobei die elektrische Kenngröße ausgewählt ist aus Strom, Spannung oder Frequenz,
- Bestimmen einer Kenngrößenänderung der elektrischen Kenngröße des Generators in einem vorbestimmten Zeitintervall,
- Vergleichen der Kenngrößenänderung mit einem ersten Grenzwert
- für den Fall, dass die Kenngrößenänderung größer ist als der erste Grenzwert, Wechsel von einer Standarddrehzahlregelung der Brennkraftmaschine auf eine Vorsteuerung.

Die Erfindung schließt die Erkenntnis ein, dass insbesondere über eine Erfassung eines ersten Stromstoßes beim Anlaufen der Asynchronmaschine und über einen darauffolgenden Wechsel von der standardmäßigen Drehzahlregelung zu einer Vorsteuerung der Anlaufprozess der Asynchronmaschine durch die Brennkraftmaschine aufgefangen werden kann, ohne dass es zunächst zu einem Einbruch der Drehzahl der Brennkraftmaschine kommt. Mit Hilfe der Vorsteuerung sind zusätzliche leistungselektronische Komponenten obsolet und ein Direktstart der Asynchronmaschine ist möglich. Es kann also prädiktiv auf eine Lastaufschaltung reagiert werden und es muss nicht erst ein Drehzahleinbruch abgewartet werden, bevor Gegenmaßnahmen eingeleitet werden. Bei einer konventionellen Lastaufschaltung wird durch die elektrische Last ein Drehmoment aufgeprägt. Durch dieses Drehmoment wird der Verbrennungsmotor gebremst und somit bricht der Verbrennungsmotor in seiner Drehzahl ein. Erst jetzt kann die Lastaufschaltung sicher erkannt und eine Gegenmaßnahme eingeleitet werden. Hierzu wird abhängig von dem Drehzahleinbruch die Kraftstoffmenge erhöht und versucht, den Motor wieder auf die vorgegebene Solldrehzahl zu beschleunigen.

Durch diese Konstellation der Drehzahlregelung muss im Stand der Technik auf eine Reaktion des Gesamtsystems Brennkraftmaschine-Generator gewartet werden. Erst nach einem Drehzahleinbruch können Gegenmaßnahmen eingeleitet werden. Mit Hilfe des erfindungsgemäßen Verfahrens ist ein solches Abwarten obsolet, durch die Erfassung des ersten Stromstoßes über die Kenngrößenänderung in einem vorbestimmten Zeitintervall kann die Lastaufschaltung präzise erkannt werden und sofortige Gegenmaßnahmen über die Vorsteuerung eingeleitet werden. Somit kann die Lastschaltfähigkeit des Gesamtsystems verbessert werden. Darüber hinaus können mit Hilfe der Erfindung starke Drehzahlschwankungen vermieden werden. Zusätzlich können unter der Einhaltung von Grenzwerten größere Lasten aufgeschaltet werden. Weiter müssen durch die schnelle Prädiktion der Last die Aggregate nicht mehr so stark überdimensioniert werden. Dies führt zu einer Kostenersparnis sowie geringerem Bauraum. Auch Aggregat läuft in besseren Betriebsbereichen durch eine höhere Auslastung.

Gemäß der Erfindung umfasst die Vorsteuerung ein Bestimmen einer angepassten Solleinspritzmenge. Die angepasste Solleinspritzmenge kann aus hinterlegten Solleinspritzmengen ausgewählt werden. Erfindungsgemäß wird die angepasste Solleinspritzmenge basierend auf einem Maß der Kenngrößenänderung bestimmt. Aus dem Maß der Kenngrößenänderung kann, beispielsweise über einen prädiktiven Algorithmus eine Schätzung der Nennleistung der Asynchronmaschine, also der Last, durchgeführt werden. Mit diesen Informationen kann dann die bevorstehende Belastung für den Verbrennungsmotor abgeschätzt werden und eine angepasste Solleinspritzmenge bestimmt werden. Über die angepasste Solleinspritzmenge kann somit die Drehzahlregelung des Verbrennungsmotors optimiert werden. Die Kenngrößenänderung kann als Gradient einer Kenngrößenkurve über die Zeit bestimmt werden.

Das Verfahren umfasst erfindungsgemäß weiterhin:
- erneutes Bestimmen der Kenngrößenänderung
- Vergleichen der Kenngrößenänderung mit einem zweiten Grenzwert, der kleiner ist als der erste Grenzwert
- für den Fall, dass die Kenngrößenänderung kleiner ist als der zweite Grenzwert, Wechsel von der Vorsteuerung zurück zur Standarddrehzahlregelung.

Über diese zusätzlichen Schritte wird zum einen festgestellt, ob die Anlaufphase der Asynchronmaschine beendet ist, indem geprüft wird, ob die Kenngrößenänderung auf ein entsprechend geringes Maß unter dem zweiten Grenzwert gesunken ist und zum anderen, soweit dies der Fall ist, die Standarddrehzahlregelung wieder aktiviert. Ist die Kenngrößenänderung weiterhin größer als der zweite Grenzwert, bleibt die Vorsteuerung aktiv.

Die Standarddrehzahlregelung umfasst ein fortlaufendes Bestimmen einer Standard-Solleinspritzmenge basierend auf einem Vergleich zwischen Soll-Drehzahl und Ist-Drehzahl der Brennkraftmaschine.

Gemäß einem zweiten Aspekt betrifft die Erfindung eine Brennkraftmaschine, insbesondere einen Dieselmotor oder Gasmotor, mit Generator und Asynchronmaschine umfassend eine Steuer- und Regeleinrichtung. Die Steuer- und Regeleinrichtung für eine Brennkraftmaschine mit Generator und Asynchronmaschine ist ausgebildet, ein Verfahren gemäß dem ersten Aspekt der Erfindung durchzuführen.

Die Steuer- und Regeleinrichtung und die Brennkraftmaschine mit Generator und Asynchronmaschine teilen die Vorteile des Verfahrens zur Steuerung und Regelung gemäß dem ersten Aspekt der Erfindung.

Nachfolgend werden vorteilhafte Weiterbildungen des Verfahrens beschrieben. Die zusätzlichen Merkmale der Ausführungsbeispiele können zur Bildung weiterer Weiterbildungen miteinander kombiniert werden, es sei denn, sie sind in der Beschreibung ausdrücklich als Alternativen zueinander beschrieben.

Es ist bevorzugt, wenn die angepasste Solleinspritzmenge umso größer ist, je größer die Kenngrößenänderung ist. Weiterhin wird die angepasste Solleinspritzmenge vorteilhaft unter Berücksichtigung eines gemessenen maximalen Anlaufstroms der Asynchronmaschine bestimmt. Der maximale Anlaufstrom ermöglicht eine weiter verbesserte Abschätzung der Nennleistung der Asynchronmaschine und damit ein verbessertes Anlaufverhalten des Gesamtsystems aus Brennkraftmaschine, Generator und Asynchronmaschine. Weiterhin kann die Vorsteuerung zusätzliche Maßnahmen zur Verbesserung der Lastschaltfähigkeit vorsehen, wie etwa eine kurzzeitige Spannungsabsenkung am Generator.

Es ist insbesondere bevorzugt, wenn die Steuer- und Regeleinrichtung einen Drehzahlregler und eine Anlagensteuerung umfasst, wobei der Drehzahlregler ausgebildet ist, die Standarddrehzahlregelung durchzuführen und die Anlagensteuerung ausgebildet ist, die Vorsteuerung durchzuführen und die Steuer- und Regeleinrichtung ausgebildet ist, für den Fall, dass die Kenngrößenabweichung oder die Kenngrößenänderung größer ist als der erste Grenzwert einen Wechsel von einer Dominanz des Drehzahlreglers zu einer Dominanz der Anlagensteuerung zu veranlassen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einem Ausführungsbeispiel vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsbeispiele oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: in einer schematischen Darstellung einen exemplarischen Verlauf eines Anlaufstromes einer Asynchronmaschine über die Zeit;
- Fig. 2: in einer schematischen Darstellung ein bevorzugtes Ausführungsbeispiel einer Steuer- und Regeleinrichtung;
- Fig. 3: in einer schematischen Darstellung ein bevorzugtes Ausführungsbeispiel einer Brennkraftmaschine mit Generator und Asynchronmaschine ;
- Fig. 4: in einer schematischen Darstellung ein bevorzugtes Ausführungsbeispiel eines Verfahrens zur Steuerung und Regelung einer Brennkraftmaschine mit Generator und Asynchronmaschine.

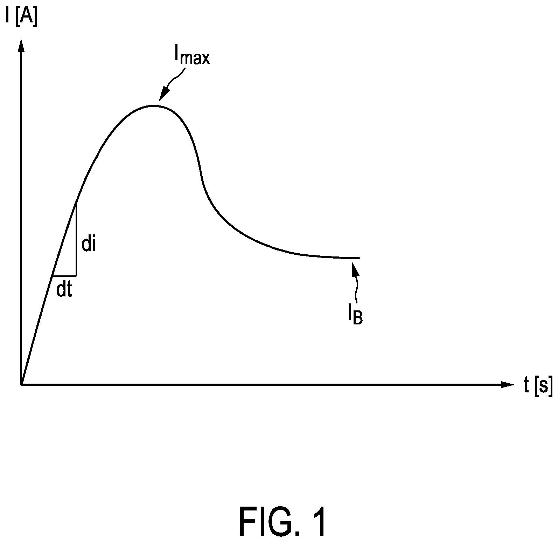

In Fig. 1 ist exemplarisch ein Verlauf eines Anlaufstroms einer Asynchronmaschine über die Zeit dargestellt. Der Anlaufstrom I steigt dabei zunächst stark an bis zu einem maximalen Anlaufstrom Iₘₐₓ und fällt dann auf ein Betriebsniveau I_{B} ab, auf dem die Asynchronmaschine nach der Anlaufphase arbeitet. Der starke Anstieg der Stromkurve zu Beginn der Anlaufphase drückt sich im Gradienten di/dt, also der Kenngrößenänderung in einem bestimmten Zeitintervall aus. Erfindungsgemäß wird dieser Anstieg als elektrische Kenngrößenänderung erfasst und soweit die Kenngrößenänderung über einem ersten Grenzwert liegt, ein Wechsel von einer Standarddrehzahlregelung einer mit der Asynchronmaschine verbundenen Brennkraftmaschine auf eine Vorsteuerung vollzogen. Im Rahmen der Vorsteuerung wird dabei eine Solleinspritzmenge für die Brennkraftmaschine bestimmt. Dies kann aus vorbestimmten Werten erfolgen oder basierend auf einem Maß der Kenngrößenänderung. Neben dem Strom kommen auch Spannung und Frequenz als elektrische Kenngröße in Betracht.

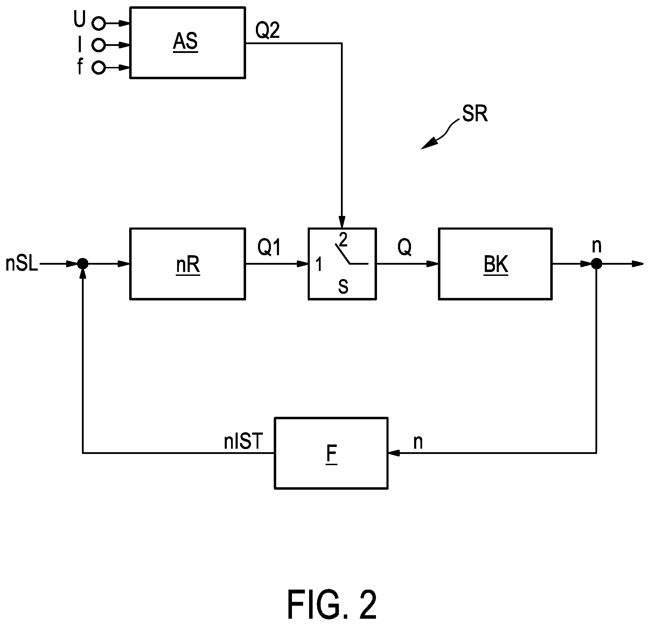

Fig. 2 zeigt in einer schematischen Darstellung ein Ausführungsbeispiel einer Steuer- und Regeleinrichtung SR für eine Brennkraftmaschine BK mit Generator und Asynchronmaschine umfassend einen Drehzahlregler nR und eine Anlagensteuerung AS. Der Drehzahlregler nR ist dabei ausgebildet, eine Standarddrehzahlregelung durchzuführen, die ein fortlaufendes Bestimmen einer Standard-Solleinspritzmenge Q1 basierend auf einem Vergleich zwischen Soll-Drehzahl nSL und Ist-Drehzahl nIST der Brennkraftmaschine BK umfasst. Im gezeigten Ausführungsbeispiel wird zusätzlich ein Filter F zur Bestimmung der Ist-Drehzahl nIST aus einer erfassten Drehzahl n eingesetzt. Die Steuer- und Regeleinrichtung SR ist ausgebildet, mindestens eine elektrische Kenngröße des Generators zu erfassen, wobei die elektrische Kenngröße ausgewählt ist aus Strom I, Spannung U oder Frequenz f und eine Kenngrößenänderung dI/dt, dU/dt, df/dt der elektrischen Kenngröße des Generators in einem vorbestimmten Zeitintervall zu bestimmen. Weiterhin ist die Steuer- und Regeleinrichtung ausgebildet, die Kenngrößenänderung dI/dt, dU/dt, df/dt mit einem ersten Grenzwert zu vergleichen und für den Fall, dass die Kenngrößenabweichung oder die Kenngrößenänderung größer ist als der erste Grenzwert einen Wechsel von einer Dominanz des Drehzahlreglers nR zu einer Dominanz der Anlagensteuerung AS zu veranlassen. Die Anlagensteuerung AS ist ausgebildet, eine Vorsteuerung durchzuführen. Die Vorsteuerung umfasst im gezeigten Ausführungsbeispiel Bestimmen einer angepassten Solleinspritzmenge Q2 basierend auf einem Maß der Kenngrößenänderung, wobei die angepasste Solleinspritzmenge umso größer ist, je größer die Kenngrößenänderung ist. Weiterhin ist die Steuer- und Regeleinrichtung SR ausgebildet, nach erneutem Bestimmen der Kenngrößenänderung die Kenngrößenänderung mit einem zweiten Grenzwert zu vergleichen, der kleiner ist als der erste Grenzwert und für den Fall, dass die Kenngrößenänderung kleiner ist als der zweite Grenzwert einen Wechsel von der Vorsteuerung zurück zur Standarddrehzahlregelung zu veranlassen. Der Wechsel von der Vorsteuerung zur Standarddrehzahlregelung und umgekehrt wird im gezeigten Ausführungsbeispiel durch Änderung einer Schalterstellung des Schalters von 2 auf 1 oder 1 auf 2 dargestellt. Eine an die Brennkraftmaschine BK ausgegebene Solleinspritzmenge Q ist somit abhängig von der Dominanz entweder die angepasste Solleinspritzmenge Q2 oder die Standard-Solleinspritzmenge Q1.

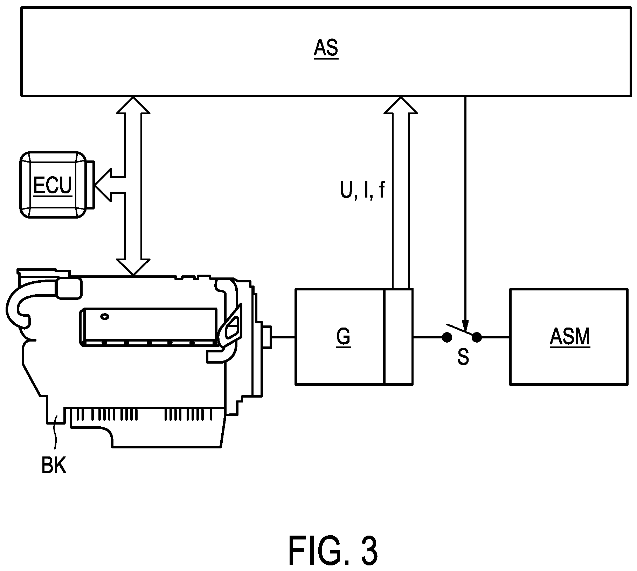

Fig. 3 zeigt in einer schematischen Darstellung ein Ausführungsbeispiel einer Brennkraftmaschine BK mit einem Generator G und einer Asynchronmaschine ASM. Die Brennkraftmaschine BK umfasst weiterhin eine Steuer- und Regeleinrichtung, die einen Drehzahlregler und eine Anlagensteuerung AS umfasst. Der Drehzahlregler ist hier als Teil des Motorsteuergerätes ECU ausgebildet. Mindestens eine elektrische Kenngröße des Generators G ausgewählt aus Strom I, Spannung U und Frequenz f wird von der Anlagensteuerung AS erfasst und eine zugehörige Kenngrößenänderung in einem vorbestimmten Zeitintervall bestimmt. Die Kenngrößenänderung wird von der Steuer- und Regeleinrichtung mit einem ersten Grenzwert verglichen und für den Fall, dass die Kenngrößenänderung größer ist als der erste Grenzwert erfolgt durch die Steuer- und Regeleinrichtung ein Wechsel von einer Standarddrehzahlregelung der Brennkraftmaschine durch den Drehzahlregler auf eine Vorsteuerung durch die Anlagensteuerung. Die Anlagensteuerung AS ist im gezeigten Ausführungsbeispiel weiterhin ausgebildet, die Asynchronmaschine über einen Schalter S zuzuschalten.

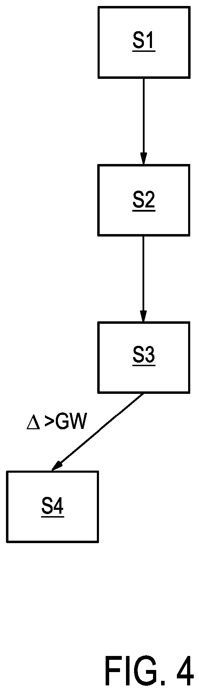

Fig. 4 zeigt in einer schematischen Darstellung ein Verfahren zur Steuerung und Regelung einer Brennkraftmaschine mit Generator und Asynchronmaschine. Mindestens eine elektrische Kenngröße des Generators ausgewählt aus Strom, Spannung und Frequenz wird in Schritt S1 erfasst und eine zugehörige Kenngrößenänderung Δ in einem vorbestimmten Zeitintervall in Schritt S2 bestimmt. Die Kenngrößenänderung Δ wird in Schritt S3 mit einem ersten Grenzwert verglichen und für den Fall, dass die Kenngrößenänderung Δ größer ist als der erste Grenzwert GW1 erfolgt ein Wechsel von einer Standarddrehzahlregelung der Brennkraftmaschine auf eine Vorsteuerung in Schritt S4. Die Vorsteuerung umfasst im gezeigten Ausführungsbeispiel Bestimmen einer angepassten Solleinspritzmenge basierend auf einem Maß der Kenngrößenänderung, wobei die angepasste Solleinspritzmenge umso größer ist, je größer die Kenngrößenänderung ist.

### Bezugszeichenliste

- I: Anlaufstrom
- Iₘₐₓ: maximaler Anlaufstrom
- I_{B}: Betriebsniveau
- SR: Steuer- und Regeleinrichtung
- BK: Brennkraftmaschine
- G: Generator
- ASM: Asynchronmaschine
- nR: Drehzahlregler
- AS: Anlagensteuerung
- Q1: Standard-Solleinspritzmenge
- nSL: Soll-Drehzahl
- nIST: Ist-Drehzahl
- n: erfasste Drehzahl
- Q2: angepasste Solleinspritzmenge
- Q: Solleinspritzmenge
- F: Filter
- S: Schalter
- GW1: erster Grenzwert
- Δ: Kenngrößenänderung

## Patentansprüche

1. Verfahren zur Steuerung und Regelung einer Brennkraftmaschine mit einer Steuer- und Regeleinrichtung (SR), insbesondere zur Steuerung und Regelung eines Dieselmotors oder Gasmotors, und mit einem Generator und mit einer Asynchronmaschine (ASM), wobei die Asynchronmaschine (ASM) über einen Schalter (S) zugeschaltet wird und das Verfahren die Schritte aufweist:
- Erfassen mindestens einer elektrischen Kenngröße des Generators (G), wobei die elektrische Kenngröße ausgewählt ist aus Strom oder Spannung,
- Bestimmen einer Kenngrößenänderung (Δ) der elektrischen Kenngröße des Generators (G) in einem vorbestimmten Zeitintervall,
- Vergleichen der Kenngrößenänderung (Δ) mit einem ersten Grenzwert (GW1),
- für den Fall, dass die Kenngrößenänderung (Δ) größer ist als der erste Grenzwert (GW1), Wechsel von einer Standarddrehzahlregelung auf eine Vorsteuerung der Steuer- und Regeleinrichtung (SR) der Brennkraftmaschine, wobei
- die Standarddrehzahlregelung ein fortlaufendes Bestimmen einer Standard-Solleinspritzmenge (Q1) basierend auf einem Vergleich zwischen Soll--Drehzahl (nSL) und Ist-Drehzahl (nIST) der Brennkraftmaschine umfasst, und
- die Vorsteuerung ein Bestimmen einer angepassten Solleinspritzmenge (Q2) basierend auf einem Maß der Kenngrößenänderung (Δ) umfasst, und
- erneutes Bestimmen der Kenngrößenänderung (Δ),
- Vergleichen der Kenngrößenänderung (Δ) mit einem zweiten Grenzwert (GW2), der kleiner ist als der erste Grenzwert (GW1),
- für den Fall, dass die Kenngrößenänderung (Δ) kleiner ist als der zweite Grenzwert (GW2), Wechsel von der Vorsteuerung zurück zur Standarddrehzahlregelung.

2. Verfahren nach Anspruch 1, bei dem die angepasste Solleinspritzmenge (Q2) umso größer ist, je größer die Kenngrößenänderung (Δ) ist.

3. Verfahren nach einem der Ansprüche 1 oder 2, bei dem die angepasste Solleinspritzmenge (Q2) unter Berücksichtigung eines gemessenen maximalen Anlaufstroms (Imax) der Asynchronmaschine (ASM) bestimmt wird.

4. Verfahren nach einem der vorhergehenden Ansprüche, **dadurch gekennzeichnet, dass** durch Erfassung eines ersten Stromstoßes eines Anlaufstroms (I) beim Anlaufen der Asynchronmaschine (ASM) die Kenngrößenänderung (Δ) in dem vorbestimmten Zeitintervall bestimmt wird und darauffolgend der Wechsel von der Standarddrehzahlregelung auf die Vorsteuerung der Steuer- und Regeleinrichtung (SR) der Brennkraftmaschine erfolgt für den Fall, dass die Kenngrößenänderung (Δ) größer ist als der erste Grenzwert (GW1).

5. Verfahren nach einem der vorhergehenden Ansprüche, bei dem die Kenngrößenänderung (Δ) in dem vorbestimmten Zeitintervall einen Gradienten (dI/dt, dU/dt) von Strom (I) oder Spannung (U) umfasst.

6. Brennkraftmaschine, insbesondere Dieselmotor oder Gasmotor, mit einem Generator (G) und mit einer zuschaltbaren Asynchronmaschine (ASM) und mit einer Steuer- und Regeleinrichtung (SR), die ausgebildet ist, ein Verfahren nach einem der Ansprüche 1 bis 5 durchzuführen und die einen Drehzahlregler (nR) und eine Anlagensteuerung (AS) umfasst, wobei der Drehzahlregler (nR) ausgebildet ist, die Standarddrehzahlregelung durchzuführen und die Anlagensteuerung (AS) ausgebildet ist, die Vorsteuerung durchzuführen und die Anlagensteuerung (AS) ausgebildet ist, die Asynchronmaschine (ASM) über einen Schalter (S) zuzuschalten.

## Claims

1. Method for the open-loop and closed-loop control of an internal combustion engine having an open-loop and closed-loop control device (SR), in particular for the open-loop and closed-loop control of a diesel engine or gas engine, and having a generator and having an asynchronous machine (ASM), wherein the asynchronous machine (ASM) is activated by means of a switch (S) and the method comprises the steps of:
- detecting at least one electrical characteristic variable of the generator (G), wherein the electrical characteristic variable is selected from current or voltage,
- determining a change (Δ) in the electrical characteristic variable of the generator (G) in a predetermined time interval,
- comparing the change (Δ) in the characteristic variable with a first threshold value (GW1),
- in the event that the change (Δ) in the characteristic variable is greater than the first limit value (GW1), changing over from standard speed control to feed-forward control of the open-loop and closed-loop control device (SR) of the internal combustion engine, wherein
- the standard speed control comprises continuously determining a standard target injection quantity (Q1) based on a comparison between the target speed (nSL) and the actual speed (nIST) of the internal combustion engine, and
- the feed-forward control comprises determining an adjusted target injection quantity (Q2) based on an extent of the change (Δ) in the characteristic variable, and
- again determining the change (Δ) in the characteristic variable,
- comparing the change (Δ) in the characteristic variable with a second limit value (GW2), which is smaller than the first limit value (GW1), and,
- in the event that the change (Δ) in the characteristic variable is smaller than the second limit value (GW2), changing over from feed-forward control back to standard speed control.

2. Method according to Claim 1, in which the adjusted target injection quantity (Q2) increases the greater the change (Δ) in the characteristic variable.

3. Method according to either of Claims 1 and 2, in which the adjusted target injection quantity (Q2) is determined taking into account a measured maximum starting current (Imax) of the asynchronous machine (ASM).

4. Method according to any of the preceding claims, **characterized in that** by detecting a first surge in a starting current (I) when starting the asynchronous machine (ASM) the change (Δ) in the characteristic variable is determined in the predetermined time interval and the changeover from the standard speed control to the feed-forward control of the open-loop and closed-loop control device (SR) of the internal combustion engine is then made in the event that the change (Δ) in the characteristic variable is greater than the first limit value (GW1).

5. Method according to any of the preceding claims, in which the change (Δ) in the characteristic variable in the predetermined time interval comprises a gradient (dl/dt, dU/dt) of current (I) or voltage (U).

6. Internal combustion engine, in particular diesel engine or gas engine, having a generator (G) and having an activatable asynchronous machine (ASM) and having an open-loop and closed-loop control device (SR) which is designed to carry out a method according to any of Claims 1 to 5 and which comprises a speed governor (nR) and a system controller (AS), wherein the speed governor (nR) is designed to carry out the standard speed control and the system controller (AS) is designed to carry out the feed-forward control and the system controller (AS) is designed to activate the asynchronous machine (ASM) by means of a switch (S).

## Revendications

1. Procédé permettant de commander et de réguler un moteur à combustion interne, comprenant un équipement de commande et de régulation (SR), en particulier pour commander et réguler un moteur diesel ou un moteur à essence, et comprenant un générateur et une machine asynchrone (ASM), la machine asynchrone (ASM) étant mise en circuit par l'intermédiaire d'un commutateur (S), et le procédé présentant les étapes consistant à :
- détecter au moins une grandeur caractéristique électrique du générateur (G), la grandeur caractéristique électrique étant sélectionnée parmi le courant ou la tension,
- déterminer une variation de grandeur caractéristique (Δ) de la grandeur caractéristique électrique du générateur (G) dans un intervalle de temps prédéterminé,
- comparer la variation de grandeur caractéristique (Δ) avec une première valeur limite (GW1),
- dans le cas où la variation de grandeur caractéristique (Δ) est supérieure à la première valeur limite (GW1), passer d'une régulation de vitesse de rotation standard à une commande pilote de l'équipement de commande et de régulation (SR) du moteur à combustion interne, dans lequel
- la régulation de vitesse de rotation standard comprend une détermination continue d'une quantité d'injection théorique standard (Q1) sur la base d'une comparaison entre la vitesse de rotation théorique (nSL) et la vitesse de rotation réelle (nIST) du moteur à combustion interne, et
- la commande pilote comprend une détermination d'une quantité d'injection théorique adaptée (Q2) sur la base d'un degré de la variation de grandeur caractéristique (Δ), et
- déterminer à nouveau la variation de grandeur caractéristique (Δ),
- comparer la variation de grandeur caractéristique (Δ) avec une deuxième valeur limite (GW2) qui est inférieure à la première valeur limite (GW1),
- dans le cas où la variation de grandeur caractéristique (Δ) est inférieure à la deuxième valeur limite (GW2), repasser de la commande pilote à la régulation de vitesse de rotation standard.

2. Procédé selon la revendication 1, dans lequel la quantité d'injection théorique (Q2) adaptée est d'autant plus grande que la variation de grandeur caractéristique (Δ) est grande.

3. Procédé selon l'une quelconque des revendications 1 ou 2, dans lequel la quantité d'injection théorique (Q2) adaptée est déterminée en tenant compte d'un courant de démarrage maximal (Imax) mesuré de la machine asynchrone (ASM).

4. Procédé selon l'une quelconque des revendications précédentes, **caractérisé en ce que** par la détection d'une première pointe de surtension d'un courant de démarrage (I) lors du démarrage de la machine asynchrone (ASM) la variation de grandeur caractéristique (Δ) est déterminée dans l'intervalle de temps prédéterminé, et ensuite le passage de la régulation de vitesse de rotation standard à la commande pilote de l'équipement de commande et de régulation (SR) du moteur à combustion interne est effectué dans le cas où la variation de grandeur caractéristique (Δ) est supérieure à la première valeur limite (GW1).

5. Procédé selon l'une quelconque des revendications précédentes, dans lequel la variation de grandeur caractéristique (Δ) dans l'intervalle de temps prédéterminé comprend un gradient (dl/dt, dU/dt) du courant (I) ou de la tension (U).

6. Moteur à combustion interne, en particulier moteur diesel ou moteur à essence, comprenant un générateur (G) et une machine asynchrone (ASM) pouvant être mise en circuit, et comprenant un équipement de commande et de régulation (SR) qui est réalisé pour exécuter un procédé selon l'une quelconque des revendications 1 à 5, et qui comprend un régulateur de vitesse de rotation (nR) et un dispositif de commande d'installation (AS), dans lequel le régulateur de vitesse de rotation (nR) est réalisé pour effectuer la régulation de vitesse de rotation standard, et le dispositif de commande d'installation (AS) est réalisé pour effectuer la commande pilote, et le dispositif de commande d'installation (AS) est réalisé pour mettre en circuit la machine asynchrone (ASM) par l'intermédiaire d'un commutateur (S).
